# EUROPEAN PATENT SPECIFICATION

(11) **EP 3 835 877 B1**
(45) Date of publication and mention of the grant of the patent: **13.11.2024**
(21) Application number: 19397533.1
(22) Date of filing: 13.12.2019
(51) Int. Cl.: G03H 1/00, G03H 1/02, G03H 1/06, G03H 1/22

(54) **SECURITY LABEL**
SICHERHEITSETIKETT
ÉTIQUETTE DE SÉCURITÉ

(43) Date of publication of application: 16.06.2021
(73) Proprietor: UPM Raflatac Oy, 33310 Tampere (FI)
(72) Inventor: Lehtonen, Pasi, 37120 Nokia (FI)
(74) Representative: Berggren Oy

(56) References cited:
- WO-A1-2019/102183
- WO-A1-2020/058578
- US-A- 6 018 403
- US-A1- 2017 315 506

## Description

### FIELD

The present invention relates to labels, for indicating authenticity of a product.

### BACKGROUND

It is known that a reflective hologram label may be attached to a product, so as to indicate authenticity of the product. The product may be a bottle, which contains a liquid.

The reflective hologram label typically comprises a hologram, which comprises a reflective metal layer.

The reflective hologram label may provide a visual effect by diffractively reflecting light which impinges on the hologram. For example, the reflective hologram label may show a first pattern when viewed in a first viewing direction, and reflective hologram label may show a second different pattern when viewed in a second different viewing direction. For example, the reflective hologram label may show a first color when viewed in a first viewing direction, and reflective hologram label may show a second different color when viewed in a second different viewing direction. WO 2019/102183 A1 and US 6018403 A both refer to methods of securing a container using a diffractive element.

### SUMMARY

The invention is directed to a method as recited in appended independent claim 1. Other aspects of the invention are recited in the appended dependent claims.

The virtual image may be utilized for determining whether the product is genuine. Forming the virtual image with the diffractive element (DOE1) and with the diverging illuminating light beam (LBO) may provide a method for indicating authenticity. Producing the diffractive element (DOE1) may require special equipment. The need to use special production equipment may make falsification of the labels more difficult, or may even prevent production of falsified labels.

On the other hand, once the diffractive element has been produced by using the special production equipment, said diffractive element may be arranged to form the virtual image by using a low cost and eye-safe illuminating arrangement. The virtual image may be formed by illuminating the diffractive element with non-coherent diverging illuminating light beam, which may be obtained e.g. from a low power light source. Using the non-coherent diverging illuminating light beam may be relatively safe to the viewing eye. The illuminating light beam may have e.g. a white color, and the illuminating light beam may be provided e.g. by using a LED light source. LED means light emitting diode.

The formed virtual image may also act as a visually detectable effect associated with a product, e.g. for advertising the product. The virtual image may enhance recognizability of the product.

The label may provide a solution for authentication of the product. The label may be difficult to counterfeit, wherein the virtual image provided by the label may be easily recognized by customers, authorities, and/or brand owners.

The label may be a security label, which comprises a diffractive optical element. The security label may comprise a diffractive optical element, which may be embedded in a laminated structure of the label.

The label may be applied to a substantially transparent container, in particular to a beverage bottle. A labeled product may comprise a container and the label attached to the container. The label may be used to indicate authenticity of the product. The label may be used as a seal to indicate integrity of the closed container.

The method may comprise determining authenticity of the product by illuminating the diffractive element with illuminating light, by observing the formed virtual image, and by determining whether the shape of the formed image matches with a reference marking. The label may provide a solution for authentication of the container. The label may provide a solution for authentication of a product contained in the container. The label may a solution for authentication of a liquid contained in the container. The label may offer easy recognition for brand owners and/or for authorities. Making a counterfeit label may be difficult, due to the special equipment needed for producing the diffractive optical element. The label may be used e.g. as a sealing label and/or as a security label.

A reference marking of the product may represent the same pattern as the virtual image. The virtual image may represent a graphical pattern. The virtual image may represent e.g. a trade mark, logo, company logo, numbers and/or text.

The diffractive element may be embedded e.g. on top of a carrier layer or below a carrier layer (e.g. between the carrier layer and an adhesive layer).

The diffractive elements and/or the labels may be produced e.g. by roll to roll production. The production of the diffractive elements may comprise e.g. embossing surface relief microstructures on a layer of UV curable lacquer. The UV curable lacquer may be cured by exposing the lacquer to ultraviolet light. An embossing tool for said embossing may be produced e.g. by a method, which comprises etching and/or electroforming.

The virtual image may be reproduced only under special illumination conditions. The virtual image may be substantially unrecognizable under normal household illumination provided by large illuminating surfaces (e.g. by a fluorescent tube, or by a luminaire having an optically diffusing surface).

In an embodiment, the label and/or the product may carry a diffractive element as a covert safety feature, wherein the virtual image may be reproduced only when an observer has knowledge about the (secret) position of the diffractive pattern of the diffractive element, and when the observer specifically illuminates the diffraction pattern with a suitable light source according to a predetermined geometry. In an embodiment, one or more conventional printed markings may e.g. overlap the diffractive element, so as to make the presence of the diffractive pattern of the diffractive element less recognizable.

In an embodiment, optical effects caused by a non-planar surface of a liquid-filled container may substantially prevent visual detection of the virtual image. A covert effect may be implemented e.g. by using the diffractive element with a liquid-filled container, which has non-planar surfaces. The virtual image may become visually detectable only after some liquid has been poured away from the container, or when the container is turned upside down.

### BRIEF DESCRIPTION OF THE DRAWINGS

In the following examples, several variations will be described in more detail with reference to the appended drawings, in which
- Fig. 1a: shows, by way of example, in a three-dimensional view, a product comprising a label arranged to form a virtual image,
- Fig. 1b: shows, by way of example, in a three-dimensional view, a product comprising a reference marking, and a label arranged to form a virtual image,
- Fig. 2a: shows, by way of example, in a side view, providing an illuminating beam from an external light source,
- Fig. 2b: shows, by way of example, in a side view, providing an illuminating beam from an optical waveguide,
- Fig. 3a: shows, by way of example, in a side view, providing an illuminating beam from a light-scattering element,
- Fig. 3b: shows, by way of example, in a side view, providing an illuminating beam from a reflector element,
- Fig. 4a: shows, by way of example, in a side view, providing an illuminating beam from a pinhole,
- Fig. 4b: shows, by way of example, in a side view, providing an illuminating beam from a light emitter,
- Fig. 5a: shows, by way of example, in a top view, an angular width of an illuminating area,
- Fig. 5b: shows, by way of example, in a side view, an angular height of the illuminating area of Fig. 5a,
- Fig. 5c: shows, by way of example, in a top view, an angular width of the virtual image,
- Fig. 6a: shows, by way of example, a virtual image together with the illuminating area,
- Fig. 6b: shows, by way of example, a virtual image,
- Fig. 6c: shows, by way of example, a virtual image formed by using a large illuminating area,
- Fig. 7a: shows, by way of example, in a cross-sectional view, a diffractive element for forming a virtual image,
- Fig. 7b: shows, by way of example, in a cross-sectional view, producing a diffractive element by using an embossing member,
- Fig. 7c: shows, by way of example, in a cross-sectional view, a protective layer for protecting diffractive features of a diffractive element,
- Fig. 7d: shows, by way of example, in a cross-sectional view, a protective film for protecting diffractive features of a diffractive element,
- Fig. 8: shows, by way of example, a label comprising a diffractive element,
- Fig. 9a: shows, by way of example, in a cross-sectional view, a label comprising a diffractive element,
- Fig. 9b: shows, by way of example, in a cross-sectional view, a label comprising a diffractive element,
- Fig. 9c: shows, by way of example, in a cross-sectional view, a label comprising a diffractive element,
- Fig. 9d: shows, by way of example, in a cross-sectional view, a label comprising a diffractive element,
- Fig. 9e: shows, by way of example, in a cross-sectional view, a label comprising a diffractive element,
- Fig. 9f: shows, by way of example, in a cross-sectional view, a label comprising a diffractive element,
- Fig. 9g: shows, by way of example, in a cross-sectional view, a label comprising a diffractive element,
- Fig. 9h: shows, by way of example, in a cross-sectional view, a label comprising a diffractive element,
- Fig. 10: shows, by way of example, in a three-dimensional view, a product comprising a label arranged to form a virtual image, and
- Fig. 11: shows, by way of example, angular dimensions of a deformed glare spot formed by a transparent container filled with a liquid.

### DETAILED DESCRIPTION

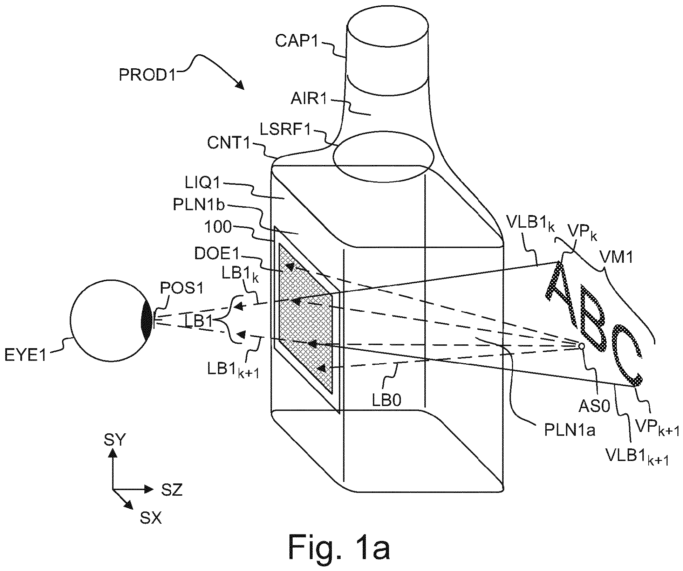

Referring to Fig. 1a, a product PROD1 comprises a combination of a transparent container CNT1 and a label 100 attached to the container CNT1.

The container CNT1 may be e.g. a substantially transparent glass bottle or a substantially transparent plastic (polymer) bottle. The container CNT1 contains an amount of a substance LIQ1. The substance LIQ1 may be e.g. substantially transparent liquid. The container may comprise drinkable liquid LIQ1, e.g. water, soft drink, or beer. The product may be e.g. a labeled beverage bottle. The product may be a labeled bottle, which contains a perfume, and/or a cosmetic product. The product may be a labeled bottle, which contains a medicament.

In general, the container CNT1 may contain a substantially transparent substance LIQ1. The container CNT1 may be e.g. a beverage bottle. The substance may consist essentially of water, wherein the refractive index of the substance may be e.g. substantially equal to 1.33. The substance may contain e.g. sugar and/or ethanol dissolved in water, wherein the refractive index of the substance may be e.g. in the range of 1.33 to 1.5.

The container may be e.g. a bottle containing a substantially transparent beverage, e.g. water, tea, juice, soft drink, beer, white wine, sparkling wine, vodka, alcoholic liqueur, whisky or brandy.

The substance may be e.g. a cosmetic product to enhance and/or alter the appearance of human face, skin or hair. The substance may be e.g. a cleansing agent for cleaning human face, skin or hair. The substance may be e.g. a perfume to give a scent to a human body.

The container may comprise e.g. a substantially transparent medicament in liquid form.

The label 100 may comprise a transmissive diffractive element DOE1 for forming a virtual image VM1. The diffractive element DOE1 may provide a diffracted light beam LB1 when illuminated with an illuminating light beam LB0. The diffractive element DOE1 may form a virtual image VM1 by diffracting light of the illuminating beam LB0. The diffractive element DOE1 forms a virtual image VM1 observable from at least one viewing position POS1 by diffracting substantially white light of the non-coherent diverging illuminating beam LB0. An observer may see the virtual image VM1 by positioning his eye EYE1 to the viewing position POS1, such that diffracted light LB1 from the diffractive element DOE1 may impinge on the pupil of the eye EYE1. The formed virtual image VM1 may comprise a plurality of image points VPₖ, VPₖ₊₁, ... For example, a first real diffracted light ray LB1ₖ formed by the diffractive element DOE1 may correspond to a first image point VPₖ of the virtual image VM1, and a second real diffracted light ray LB1ₖ₊₁ formed by the diffractive element DOE1 may correspond to a second different image point VPₖ of the virtual image VM1. An extension line VLB1ₖ of the first ray LB1ₖ₊₁ may coincide with the first image point VPₖ when the virtual image VM1 is viewed from the viewing position POS1, and an extension line VLB1ₖ₊₁ of the second ray LB1ₖ₊₁ may coincide with the second image point VPₖ₊₁ when the virtual image VM1 is viewed from said viewing position POS1.

The virtual image VM1 may represent e.g. graphics and/or text. The virtual image VM1 may represent e.g. a graphical symbol. The virtual image VM1 may represent e.g. a graphical symbol associated with the product PROD1. The virtual image VM1 may represent information in graphical form. The virtual image may indicate e.g. a trademark, a company, a manufacturer, or a geographical location associated with the substance LIQ1. The virtual image may be e.g. a symbol of an organization which has approved the substance LIQ1.

Illuminating the diffractive element DOE1 with the white non-coherent diverging light beam LB0 may reduce or eliminate the risk of damaging the eye EYE1, when viewing the virtual image VM1. As a comparative example, illuminating the transmissive diffractive element DOE1 with a coherent monochromatic laser beam may be dangerous to the viewing eye EYE1.

The diverging light beam LB0 obtained from the illuminating area ASO may illuminate a large region of the diffractive element DOE1, so as to provide more freedom to select the position of the eye EYE1 with respect to the product PROD1. For example, the light beam LB0 may illuminate substantially the whole area of the diffractive element DOE1. The width of the diffractive element DOE1 may be e.g. in the range of 5% to 100% of the width or diameter of the container CNT1.

The diffraction efficiency of the transmissive diffractive element DOE1 may be smaller than 100%. Consequently, the eye EYE1 may also receive transmitted light rays through the diffractive element DOE1 from the illuminating area AS0. Thus, the eye EYE1 may see a combination of the virtual image VM1 and the illuminating area AS0. The illuminating beam LB0 may be provided such that the visual brightness of the illuminating area AS0, when viewed from the viewing position POS1 is smaller than a predetermined limit, so as to reduce glare and/or so as to reduce a risk of damaging the eye.

The angular width of the illuminating area AS0, when viewed from the viewing position POS1 may be e.g. in the range of 0.001 rad to 0.01 rad, e.g. in order to reduce glare and in order to provide a substantially sharp virtual image.

The angular width (α0) of the illuminating area AS0, when viewed from the viewing position POS1 may be e.g. in the range of 0.001 rad to 0.01 rad, and the angular height (β0) of the illuminating area AS0, when viewed from the viewing position POS1 may be e.g. in the range of 0.001 rad to 0.01 rad.

Using an illuminating area ASO smaller than 0.001 rad may provide a very sharp virtual image, but the glare effect of the illuminating area ASO may be high. Using an illuminating area ASO smaller than 0.001 rad may cause a situation where the brightness of the illuminating area ASO is very high when compared with the brightness of the virtual image.

Using an illuminating area ASO larger than 0.01 rad may reduce the glare effect, but may also cause excessive blurring of the virtual image VM1.

An angular width (α0) of the illuminating area ASO may be e.g. in the range of 0.001 rad to 0.01 rad when viewed from the viewing position POS1. An angular width (α0) of the illuminating area ASO may be e.g. in the range of 0.001 rad to 0.01 rad when the distance (L3) between the first viewing position POS1 and the diffractive element DOE1 is equal to 0.5 m.

A distance (L1) between the viewing position (POS1) and the illuminating area (ASO) may be e.g. in the range of 100 to 1000 times a transverse dimension (w_{AS0}, h_{AS0}) of the illuminating area (AS0).

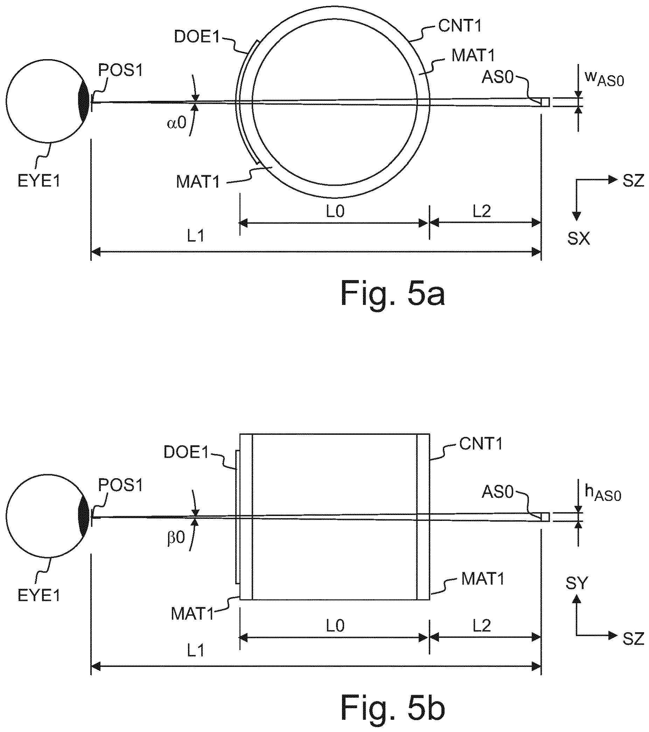

The transverse dimensions (w_{AS0},h_{AS0}) of an illuminating area AS0, and the corresponding angular dimensions (α0, β0) are shown e.g. in Figs. 5a and 5b. The angular width (α0) of the illuminating area AS0 may be substantially equal to the width (w_{AS0}) of illuminating area AS0 divided by a distance (L1) between the viewing position (POS1) and the illuminating area AS0. The angular height (β0) of the illuminating area AS0 may be substantially equal to the height (h_{AS0}) of illuminating area AS0 divided by a distance (L1) between the viewing position (POS1) and the illuminating area AS0.

The container CNT1 may contain an amount of a liquid LIQ1. The container CNT1 may contain an amount of a substantially transparent liquid LIQ1. The combination of the liquid LIQ1 and a non-planar portion of the container CNT1 may substantially deform the visual shape of the illuminating area AS0, when viewed from the viewing position POS1. The deforming effect may be avoided e.g. when the illuminating beam LB0 is coupled from the illuminating area ASO to the diffractive element DOE1 through substantially planar portions (PLN1a, PLN1b) of the container CNT1. In particular, the eye EYE1 may receive diffracted light LB1 from a diffractive element DOE1, which is located on a substantially planar portion (PLN1b) of the container CNT1. Coupling the illuminating beam LB0 to the diffractive element DOE1 through planar portions (PLN1a, PLN1b) of the container CNT1 may provide a substantially sharp virtual image VM1, when viewed from the viewing position POS1. Coupling the illuminating beam LB0 to the diffractive element DOE1 through planar portions (PLN1a, PLN1b) of the container CNT1 may provide a substantially sharp virtual image VM1, also in a situation where the illuminating beam LB1 is transmitted through the liquid LIQ1 contained in the container CNT1.

The product PROD1 may comprise an amount of a transparent liquid (substance) LIQ1. The illuminating beam LB0 may propagate through a first planar portion PLN1a of the container CNT1 to the liquid LIQ1, through the liquid LIQ1 to the second planar portion PLN1b, and through the second planar portion PLN1b to the diffractive element DOE1. LSRF1 may denote a surface of the liquid LIQ1, i.e. a gas-liquid interface. The product PROD1 may optionally comprise a cover or a cap CAP1 for closing the container CNT1. SX, SY and SZ may denote orthogonal directions. The direction SZ may be e.g. substantially parallel with a viewing line drawn from the viewing position POS1 to the center of the illuminating area AS0.

The material (MAT1) of the wall of the container CNT1 may be e.g. glass or polymer. The polymer may be e.g. polyester, PET (Polyethylene terephthalate), PC (polycarbonate), PP (polypropylene), or PE (polytethylene).

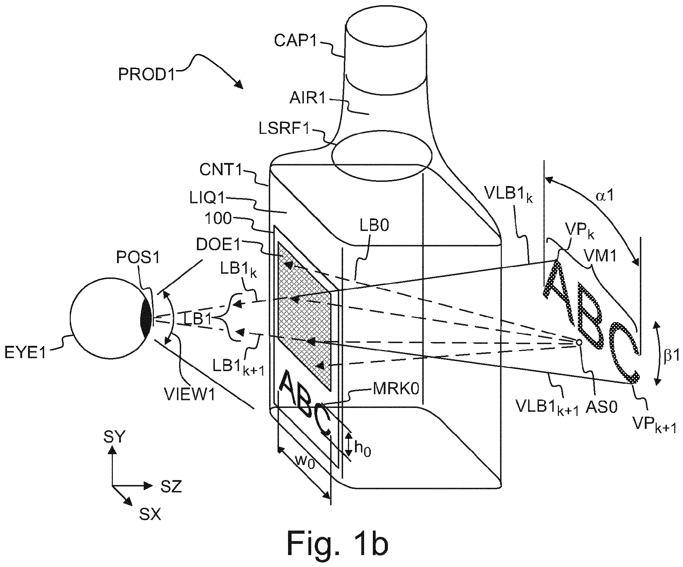

Referring to Fig. 1b, the virtual image VM1 may have an angular width α1 and an angular height β1. The aspect ratio (R1) of the virtual image VM1 may mean the ratio (α1/β1) of the angular width α1 to the angular height β1.

The product PROD1 may optionally comprise a reference marking MRKO. The reference marking MRKO and the virtual image VM1 may represent the same graphical symbol.

The reference marking MRKO may have a width w0 and a height h0. The aspect ratio (R0) of the reference marking MRKO may mean the ratio (wO/hO) of the width w0 to the height h0.

The diffractive element DOE1 may be arranged to form the virtual image VM1 such that the aspect ratio (R1) of the virtual image VM1 may be substantially equal to the aspect ratio (R0) of the reference marking MRKO. For example, the diffractive element DOE1 may be arranged to form the virtual image VM1 such that the aspect ratio (R1) of the virtual image VM1 is in the range of 0.9 to 1.1 times the aspect ratio (R0) of the reference marking MRKO.

The method may comprise visually checking whether the virtual image VM1 matches with the reference marking MRKO. Providing the substantially equal aspect ratios (R1, R0) may facilitate the visual checking.

The method may comprise determining whether the shape of the formed virtual image VM1 matches with the shape of the reference marking MRKO or not. Said determining may be performed by visually observing the virtual image VM1 and by visually observing the reference marking MRKO.

Determining that the shape of the formed virtual image VM1 matches with the shape of the reference marking MRKO may be an indication that the product PROD1 is genuine. Determining that the formed virtual image VM1 matches with the reference marking MRKO may be an indication that the product PROD1 is genuine. Determining that the virtual image VM1 does not match with the reference marking MRKO may be an indication that the product PROD1 is not genuine.

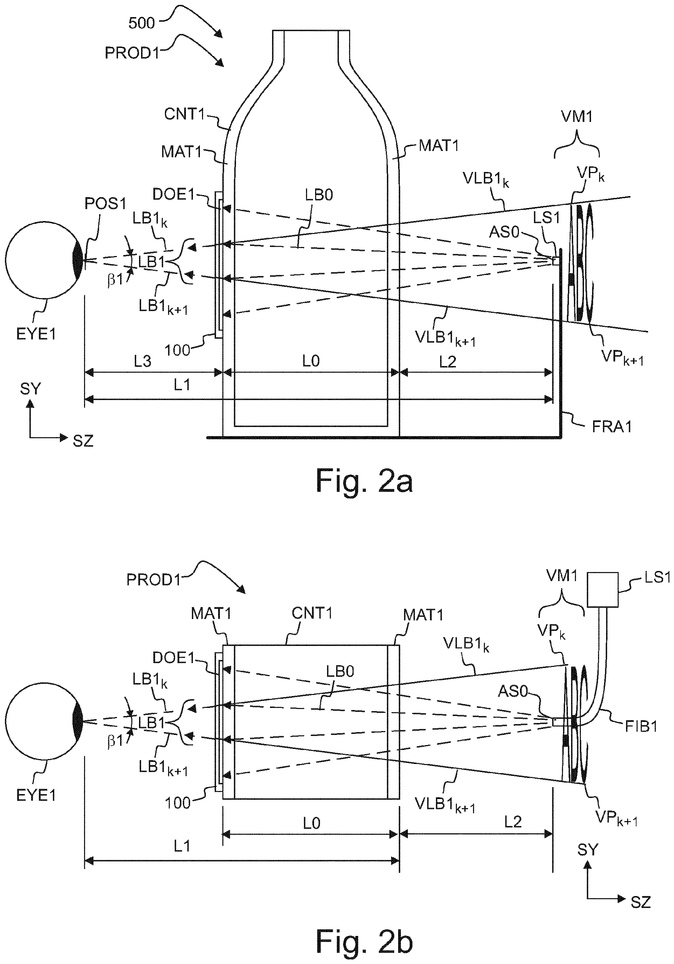

Referring to Fig. 2a, the illuminating beam LB0 may be provided by using light, which is emitted from a light source LS1.

The light source LS1 may comprise e.g. one or more light emitting diodes. Transverse dimensions (w_{AS0}, h_{AS0}) of the illuminating area ASO may be defined by dimensions of the light source LS1. The height h_{AS0} and the width w_{AS0} of the illuminating area AS0 may be defined by the light source LS1. For example, the height h_{AS0} and the width W_{AS0} of the illuminating area AS0 may be substantially equal to the height and width of an emitter region of a single light emitting diode.

The container CNT1 may have a dimension L0 in the viewing direction, e.g. in the direction SZ. L1 may denote a distance between the viewing point POS1 and the illuminating area AS0. L2 may denote a distance between the container CNT1 and the illuminating area AS0. L3 may denote a distance between the viewing position POS1 and the diffractive element DOE1. The distance L3 may be e.g. substantially equal to 0.5 m.

A light ray LB1ₖ may represent e.g. an uppermost point of the virtual image VM1, and a light ray LB1ₖ₊₁ may represent e.g. a lowermost point of the virtual image VM1.

The angular height β1 of the virtual image VM1 may be equal to a maximum (vertical) difference between inclination angles of light rays LB1ₖ, LB1ₖ₊₁, which correspond to image points of the virtual image VM1.

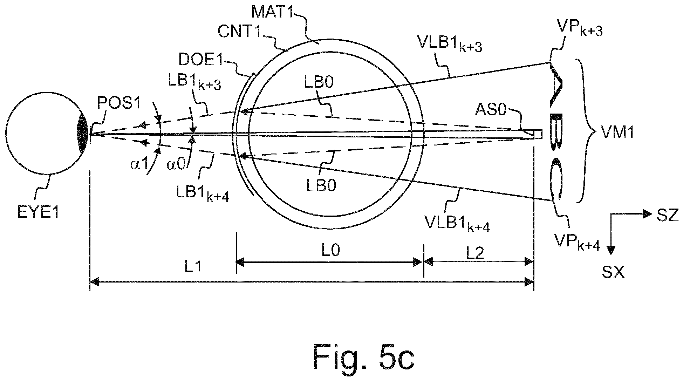

The virtual image VM1 may have an outermost image point on the left-hand side of the virtual image VM1, and an outermost image point on the right-hand side of the virtual image VM1. The angular width α1 of the virtual image VM1 may be equal to a maximum (horizontal) difference between azimuthal angles of light rays (LB1ₖ₊₃, LB1ₖ₊₄) which correspond to said outermost image points (see e.g. the light rays LB1ₖ₊₃, LB1ₖ₊₄ in Fig. 5c).

The container CNT1 may have a selected position with respect to the illuminating area AS0. The position of the illuminating area ASO and/or the position of the container CNT1 may be defined e.g. by one or more frame elements FRA1. For example, a display rack or a building structure may be arranged to operate as a frame element FRA1. For example, an illuminating area ASO may be attached to a rack, and the container CNT1 may be supported by the rack, so as to define the position of the container CNT1 with respect to the illuminating area AS0. For example, an illuminating area ASO may be attached to a wall of a building, and the container CNT1 may be supported by a rack, so as to define the position of the container CNT1 with respect to the illuminating area AS0.

A system 500 for forming a virtual image VM1 may comprise the container CNT1, the label 100 with the diffractive element DOE1, the illuminating area AS0, a light source LS1, and optionally one or more frame elements FRA1.

The illuminating area ASO may also be attached to the container CNT1, so as to define the position of the diffractive element DOE1 with respect to the illuminating area AS0. The frame element FRA1 may be optional.

In an embodiment, the illuminating area ASO may be implemented e.g. by using a portable light source LS1. The portable light source LS1 may be temporarily supported by a frame element FRA1, so as to temporarily illuminate the diffractive element DOE1.

For example, a (portable) mobile phone (or a tablet) may comprise a light emitting diode, which may be used as the illuminating area ASO for providing the illuminating light beam LB0. The light emitting diode may be arranged to emit substantially white non-coherent light e.g. by enabling a torch functionality of the mobile phone. The light source LS1 of the mobile phone may be arranged to illuminate the diffractive element DOE1 with the illuminating light beam LB0, so as to form the virtual image VM1. The mobile phone may be supported at a suitable position at a suitable distance L2 from the product PROD1, so as to enable visually observing the diffractively produced virtual image VM1. The mobile phone may be supported manually or by a frame element FRA1. The diffractive element DOE1 may be arranged to form a virtual image VM1, which is observable in a situation where the diffractive element DOE1 is illuminated by a light beam LB0 obtained from the light source LS1 of the mobile phone. The method may comprise obtaining a diverging non-coherent substantially white illuminating light beam LB0 from a mobile phone, and illuminating the diffractive element DOE1 with the illuminating light beam LB0.

In an embodiment, the product PROD1 may further comprise an illuminating area AS0, and/or a light source LS1, in addition to the container CNT1 and the diffractive element DOE1. The product PROD1 may comprise the container CNT1, the label 100 with the diffractive element DOE1, an illuminating area AS0, and a light source LS1.

The substantially transparent material (MAT1) of the wall of the container CNT1 may be e.g. glass or polymer.

Referring to Fig. 2b, the light source LS1 and/or the illuminating area ASO may be implemented by using an optical waveguide FIB1. The method may comprise guiding light via an optical waveguide FIB1. The optical waveguide may be e.g. an optical fiber. The transverse dimensions of the illuminating area ASO may be defined by the end of the optical waveguide FIB1. An input end of the waveguide FIB1 may receive light from a light source LS1. The waveguide FIB1 may guide light received from a light source LS1 to an output end of the waveguide. The output end of the waveguide may operate as the illuminating area AS0.

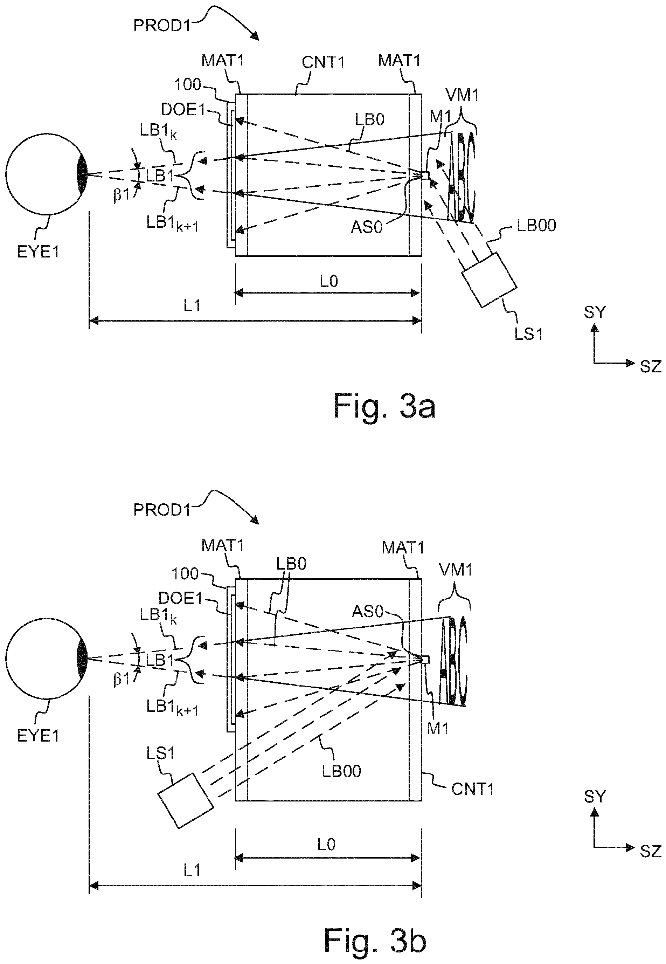

Referring to Figs. 3a and 3b, the method may comprise providing the illuminating light beam LB1 from a light deflecting element M1. The deflecting element M1 may be e.g. a reflective element (mirror), a light-scattering element (diffusing element), or a refracting element (prism). The light source LS1 may provide a primary beam LB00, and the deflecting element M1 may provide the illuminating beam LB1 by deflecting a part of the light of primary beam LB00. The dimensions of the light deflecting element M1 may define the dimensions of the illuminating area AS0.

The deflecting element M1 may be e.g. a reflective piece of aluminum. The deflecting element M1 may be e.g. glass prism or a plastic prism. The deflecting element M1 may be e.g. a diffusing piece of plastic or glass. The deflecting element M1 may be attached to the container CNT1 or to a frame element FRA1.

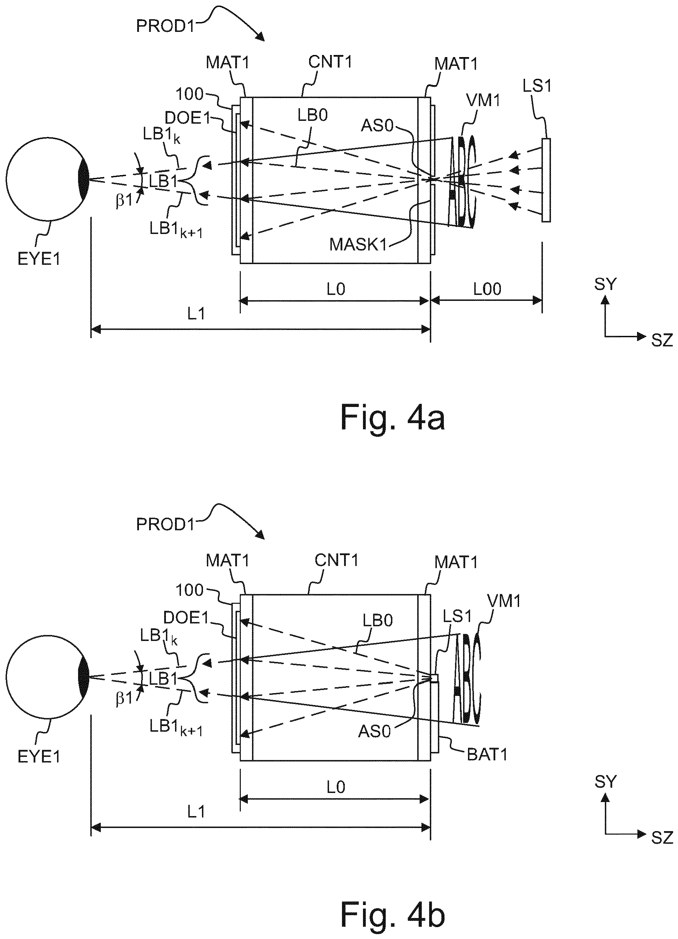

Referring to Fig. 4a, the illuminating area ASO may be defined e.g. by an opening of a mask MASK1. An opening (ASO) of the mask MASK1 may operate as the illuminating area AS0. For example, a portion of a label 100 may be arranged to operate as a mask MASK1. The opening may also be called e.g. as a pinhole. The mask MASK1 with the opening may receive a primary beam LB00 from a light source LS1. The mask MASK1 may provide the illuminating beam LB0 by allowing only a central portion of the primary beam LB00 to pass through the opening AS0.

Referring to Fig. 4b, the product PROD1 may comprise a light source LS1, which may comprise an illuminating area ASO for providing the illuminating beam LB0. The light source LS1 may comprise e.g. a light emitting diode (LED).

The product PROD1 may comprise an energy unit BAT1 for providing operating energy for the light source LS1. The energy unit BAT1 may comprise e.g. a battery. The energy unit BAT1 may receive energy by wireless energy transfer. The energy unit BAT1 may comprise e.g. an inductive coil to extract electrical energy from an alternating magnetic field. The energy unit BAT1 may comprise e.g. one or more antenna elements for extracting energy from an alternating electromagnetic field. The energy unit BAT1 may be arranged to harvest energy from an alternating electromagnetic field generated by an auxiliary unit. The energy unit BAT1 may comprise e.g. a connector to receive electric power via conductive wires.

Referring to Figs. 5a and 5b, the illuminating area ASO may have angular dimensions α0, β0 when viewed from the viewing position POS1.

For example, the angular width α0 of the illuminating area ASO may be substantially equal to the ratio w_{AS0}/L1, wherein the symbol W_{AS0} may denote the width of the illuminating area AS0, and L1 may denote the distance between the viewing position POS1 and the illuminating area AS0.

For example, the angular height β0 of the illuminating area AS0 may be substantially equal to the ratio h_{AS0}/L1, wherein the symbol h_{AS0} may denote the height of the illuminating area AS0, and L1 may denote the distance between the viewing position POS1 and the illuminating area AS0.

Fig. 5c shows the angular width α1 of the virtual image VM1. A diffracted light ray LB1ₖ₊₃ may represent an outermost image point VPₖ₊₃ on the left-hand side of the virtual image VM1. A diffracted light ray LB1ₖ₊₄ may represent an outermost image point VPₖ₊₄ on the right-hand side of the virtual image VM1. The angular width α1 of the virtual image VM1 may be equal to a maximum (horizontal) difference between azimuthal angles of the light rays LB1ₖ₊₃, LB1ₖ₊₄ which correspond to said outermost image points of the virtual image VM1. An extension line VLB1ₖ₊₃ of the ray LB1ₖ₊₃ may coincide with the outermost image point VPₖ₊₃ when the virtual image VM1 is viewed from the viewing position POS1, and an extension line VLB1ₖ₊₄ of the ray LB1ₖ₊₄ may coincide with the outermost image point VPₖ₊₄ when the virtual image VM1 is viewed from said viewing position POS1.

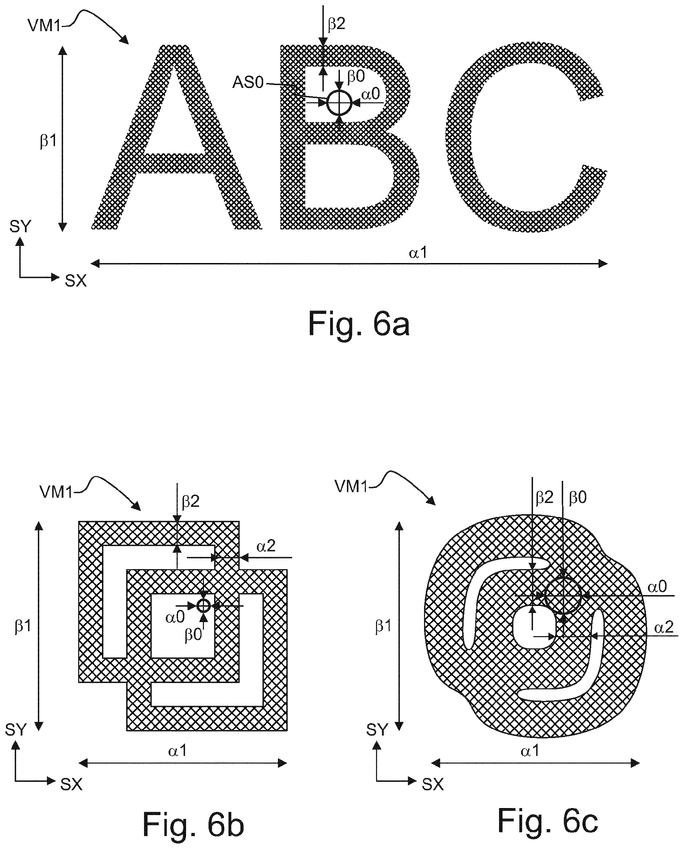

Referring to Figs. 6a and 6b, the features of the virtual image VM1 may have an angular width α2 and an angular height β2, when viewed from the viewing position POS1. The virtual image VM1 may have a total angular width α1 and a total angular height β1, when viewed from the viewing position POS1.

The angular dimensions α0, β0 of the illuminating area ASO may have an effect on the angular dimensions α1, β1 of the features of the virtual image VM1. Small angular dimensions α0, β0 may provide a substantially sharp virtual image VM1. Large angular dimensions α0, β0 may provide a blurred virtual image VM1. The angular dimensions α0, β0 may be e.g. smaller than 50% of the angular dimensions α1, β1, so as to provide a substantially sharp virtual image VM1.

Fig. 6b shows, by way of example, a sharp virtual image VM1 formed in a situation where the angular width α0 of the illuminating area ASO is smaller than 50% of the angular width α2 of the features of the virtual image VM1 and where the angular width α0 of the illuminating area AS0 is smaller than 50% of the angular width α2 of the features of the virtual image VM1. The virtual image VM1 of Fig. 6b may depict e.g. a first square borderline and a second displaced square borderline.

Fig. 6c shows, by way of example, a blurred virtual image VM1 formed in a situation where the angular width α0 of the illuminating area ASO is greater than 80% of the angular width α2 of the features of the virtual image VM1 and/or where the angular width α0 of the illuminating area ASO is greater than 80% of the angular width α2 of the features of the virtual image VM1.

The angular dimensions α0 and β0 of the illuminating area ASO may be selected e.g. by selecting the distance L1 and/or by selecting the width W_{AS0} and the height h_{AS0} of the illuminating area AS0. The blurred virtual image VM1 of Fig. 6c may be converted into the sharp virtual image VM1 of Fig. 6b e.g. by increasing the distance L1 and/or by reducing the size of the illuminating area AS0.

The diffractive properties of the diffractive element (DOE1) and/or the dimensions (α0,β0) of the illuminating area (ASO) may be selected such that the angular width (α2,β2) of each feature of the virtual image (VM1) is e.g. greater than 125% of the angular width (α0,β0) of the illuminating area (ASO) so as to limit the relative blurring effect of the illuminating area (ASO). The value 125% is equal to the inverse of 80% (i.e. 1.25 = 1/0.8).

The diffractive properties of the diffractive element (DOE1) and/or the dimensions (α0,β0) of the illuminating area (ASO) may be selected such that the angular width (α2,β2) of each feature of the virtual image (VM1) is e.g. greater than 200% of the angular width (α0,β0) of the illuminating area (ASO) so as to provide a substantially sharp virtual image VM1. The value 200% is equal to the inverse of 50% (i.e. 2=1/0.5).

The sharp virtual image VM1 of Fig. 6b and the blurred virtual image VM1 of Fig. 6c may be formed by the same diffractive element DOE1, wherein the sharp virtual image VM1 of Fig. 6b and the blurred virtual image VM1 of Fig. 6c may be viewed from the same viewing position POS1.

A very sharp reference virtual image VM1 may also be produced by illuminating the diffractive element DOE1 with a reference illuminating beam (LBO) obtained from a reference illuminating area (ASO). The reference illuminating beam may be used e.g. for verifying diffractive properties of the diffractive element DOE1. The reference illuminating beam may be used e.g. for measuring the minimum angular dimensions of the features of the formed (reference) virtual image VM1. For example, the diffractive element (DOE1) may be arranged to diffract light such that an angular width (α2,β2) of each feature of a reference virtual image (VM1) is greater than 0.01 rad, the reference virtual image (VM1) being formed in a reference situation where an reference illuminating light beam (LBO) is obtained from a reference illuminating area (ASO), which has an angular width (α0) of 0.001 rad when viewed from the viewing position (POS1), the reference illuminating beam being a non-coherent light beam (LBO), which has substantially white color.

A very sharp reference virtual image VM1 for testing purposes may also be produced by illuminating the diffractive element DOE1 with a monochromatic coherent collimated laser beam (LB0). The wavelength of the laser beam (LBO) may be e.g. 550 nm. The angular widths and angular heights of the features of the reference virtual image VM1 may be measured e.g. by positioning a digital camera to the viewing position POS1, and using the digital camera for capturing a digital image of the virtual image VM1. The captured digital image may be analyzed to measure the angular widths and angular heights of the features of the reference virtual image VM1. Using the digital camera instead of the eye may reduce the risk of damaging the eye with the laser beam (LB0). For example, the diffractive element (DOE1) may be arranged to diffract light such that an angular width (α2,β2) of each feature of a reference virtual image (VM1) is greater than 0.01 rad when the diffractive element DOE1 is illuminated with the laser beam.

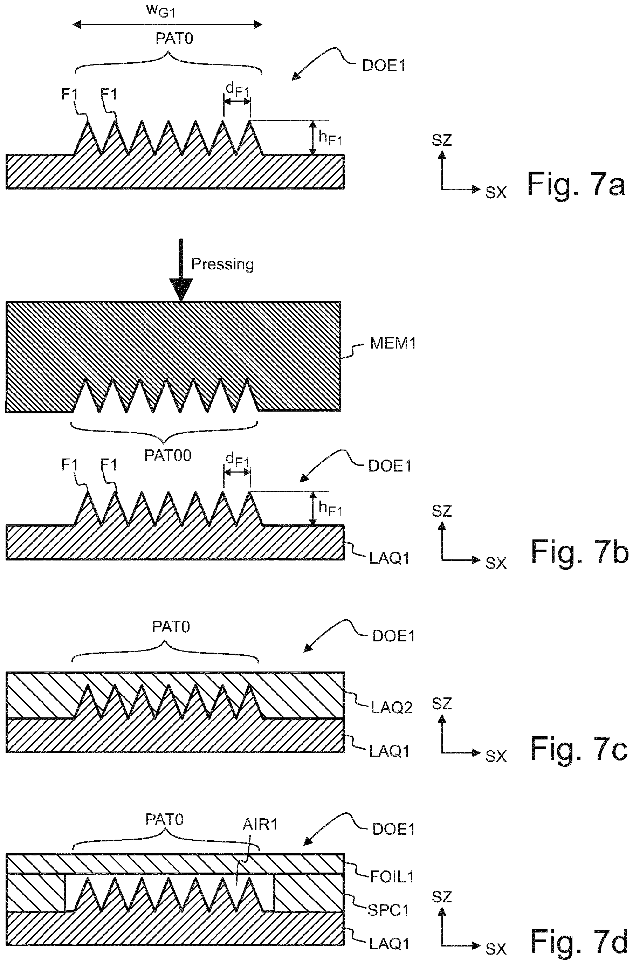

Fig. 7a shows, by way of example, in a cross-sectional view, a diffractive element DOE1. The diffractive element DOE1 may comprise a plurality of diffractive features F1, which may together form a diffractive pattern PATO. The diffractive features F1 may be e.g. microscopic ridges and/or grooves. The symbol d_{F1} may denote an average distance between adjacent diffractive ridges F1. The symbol h_{F1} may denote an average height of diffractive ridges F1. The diffractive pattern PATO may have a width w_{G1}. The height (h_{F1}) of the diffractive features F1 may be e.g. in the range of 0.1 µm to 1.0 µm. The distance (d_{F1}) between adjacent peaks of the diffractive features F1 may be e.g. in the range of 0.8 µm to 10 µm.

Fig. 7b shows, by way of example, in a cross-sectional view, forming a diffractive element DOE1 by using an embossing member MEM1. The embossing member MEM1 may comprise surface relief pattern PAT00, which may be replicated e.g. by pressing the embossing member MEM1 against a material LAQ1. The material LAQ1 may be e.g. curable, moldable, thermoplastic or thermosetting material. The material LAQ1 may be e.g. a polymer material. The pattern PAT00 may be replicated e.g. by using the embossing member MEM1 as a mold. The surface relief pattern PAT00 may be formed e.g. by etching and/or by electroplating. The surface relief pattern PAT00 may be designed e.g. by using a computer-implemented model such that the diffractive element DOE1, when illuminated with the illuminating light LB0 may provide the virtual image which matches the selected reference marking MRKO. The positions and the dimensions of the diffractive features F1 may be determined e.g. by computer-generated holography, so as to provide a capability to form a predetermined virtual image. Optical modeling may be utilized to determine a surface relief pattern PATO, PAT00 which provides a desired spatial brightness distribution of the virtual image. The surface relief pattern PATO, PAT00 may be designed e.g. by using the rigorous electromagnetic theory.

The embossing member for said embossing may be produced e.g. by a method, which comprises etching and/or electroforming. The etching may comprise e.g. electron beam lithography and/or laser etching.

Embossing may be performed as sheet process or as a roll-to-roll process.

Fig. 7c shows, by way of example, in a cross-sectional view, protecting the diffractive element DOE1 with a protective layer, wherein a filling material LAQ2 may at least partly fill diffractive grooves of the diffractive element DOE1. The refractive index of the filling material LAQ2 may be different from the refractive index of the first polymer material LAQ1 so as to provide sufficient diffraction efficiency. The label 100 may comprise a protective layer LAQ2 to protect the diffractive features F1 of the diffractive element DOE1.

Fig. 7d shows, by way of example, in a cross-sectional view, protecting the diffractive element DOE1 with a protective foil FOIL1. Diffractive grooves of the diffractive element DOE1 may be substantially completely filled with a gas (e.g. air). The label 100 may optionally comprise one or more spacer elements SPC1 for attaching the protective foil FOIL1 to the diffractive element DOE1.

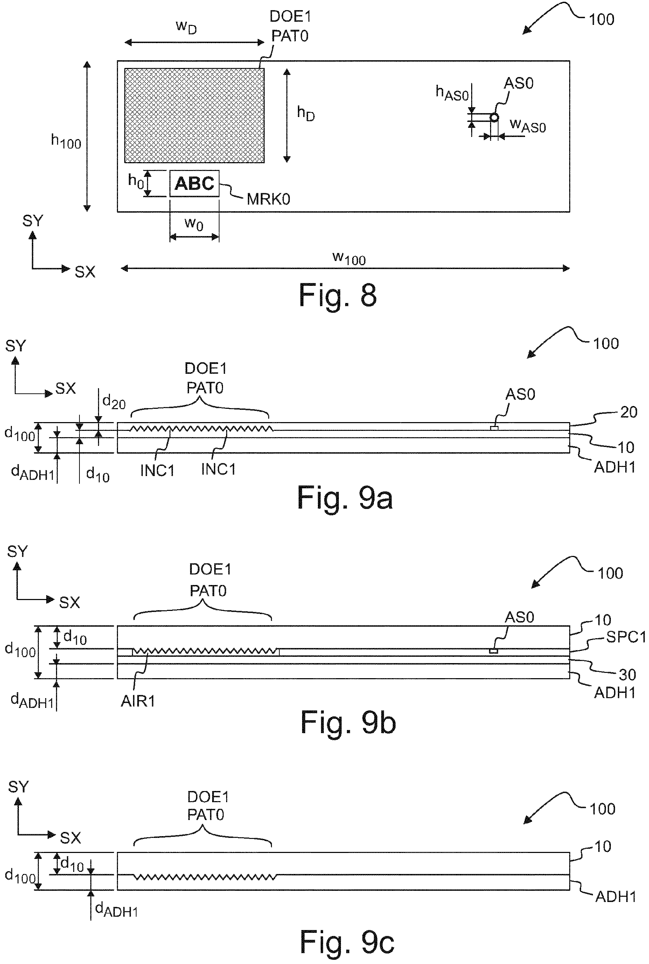

Fig. 8 shows, by way of example, a label 100 which comprises a diffractive element DOE1. The label 100 may comprise one or more diffractive elements DOE1. A material layer of the label 100 may comprise a diffractive pattern PATO, so as to provide a diffractive element DOE1. One or more diffractive elements DOE1 may be embedded in the label 100.

The label 100 may have a height h₁₀₀ and a width w₁₀₀ before attaching to the container CNT1. The dimensions of the label 100 may be selected such that the label 100 may be attached to a container CNT1. The dimensions of the label 100 may be selected according to a container CNT1, such that the label 100 may be used to provide the virtual image VM1 when attached to said container CNT1. The width w₁₀₀ of the label 100 may be e.g. in the range of 15% to 150% of the circumference of the container CNT1. The height h₁₀₀ of the label 100 may be e.g. in the range of 5% to 120% of the height of the container CNT1.

The width w₁₀₀ may be e.g. in the range of 50 mm to 300 mm, and the height h₁₀₀ may be e.g. in the range of 50 mm to 150 mm.

The label may be attached the exterior surface of a bottle e.g. to indicate authenticity of the contents of the bottle.

The label 100 may also be e.g. a wrap-around label. The label 100 may be wrapped around a bottle. The wrapped label may be optionally shrunk around the bottle e.g. by heating such that the label may accurately conform to the shape of the bottle.

The label 100 may optionally comprise one or more reference markings MRKO. The reference marking MRKO may be formed on the label 100 e.g. by printing.

The label 100 may optionally comprise one or more features for defining the illuminating area AS0. A feature for defining the illuminating area ASO may be optionally implemented in any material layer of the label 100. A feature for defining the illuminating area ASO may be optionally implemented in one or more material layers of the label 100. For example, the label 100 may comprise a deflecting element M1 (Figs. 3a and 3b). For example, the label 100 may comprise an opening (ASO) in an opaque portion (MASK1, Fig. 4a).

The labeled container PROD1 may comprise only one label 100. Using a single label may allow labeling at high speed and/or may ensure that an illuminating area ASO is accurately positioned with respect to the optical element DOE1.

The labeled container PROD1 may comprise a first label and a second label, wherein the first label may comprise the optical element DOE1, and a portion of the second label may be arranged to operate as the illuminating area AS0.

The labeled container PROD1 may further comprise a reference marking MRKO. The first label and/or the second label may further comprise the reference marking MRKO. The labeled container PROD1 may comprise a third label, which may comprise the reference marking MRKO.

Fig. 9a shows, by way of example, in a cross-sectional view, a label 100 which comprises a diffractive element DOE1. The label 100 may comprise a carrier layer 10. The carrier layer 10 may support the diffractive element DOE1, or the diffractive pattern PATO of the diffractive element DOE1 may be formed on the surface of the carrier layer 10. The diffractive element DOE1 may be attached to the carrier layer 10. The element DOE1 may be formed e.g. by applying a layer of lacquer (LAQ1) on the carrier layer 10, and by forming the optical element on the lacquer layer (LAQ1).

The label 100 may comprise one or more protective layers 20 to protect the diffractive pattern PATO of the diffractive element DOE1. The protective layer 20 may be formed e.g. by applying protective material LAQ2 over the diffractive pattern PAT0.

The label 100 may comprise an adhesive layer ADH1 for bonding the label 100 to the container CNT1. The diffractive element DOE1 may have a thickness d₁₀. The protective layer 20 may have a thickness d₂₀. The adhesive layer ADH1 may have a thickness d_{ADH1}. The label 100 may have a total thickness d₁₀₀. The label 100 may optionally comprise one or more features or elements (e.g. M1) to define the illuminating area AS0.

The label 100 may optionally comprise one or more structural features (INC1) to ensure that the label 100 is irreversibly damaged upon an attempt to remove the label 100

Fig. 9b shows, by way of example, in a cross-sectional view, a label 100 which comprises a diffractive element DOE1. The label 100 may comprise carrier layer 10 to support the diffractive element DOE1. The diffractive element DOE1 may be attached to the carrier layer 10. The diffractive pattern PATO may be formed on the material of the carrier layer 10. The element DOE1 may be formed e.g. by applying a layer of lacquer (LAQ1) on the carrier layer 10, and by forming the diffractive pattern PATO on the lacquer layer.

The label 100 may optionally comprise a protective transparent foil 30 to protect the diffractive pattern PATO of the diffractive element DOE1. The label 100 may optionally comprise one or more spacer elements SPC1 to attach the protective foil 30 to the diffractive element DOE1 and/or to the carrier layer 10. The diffractive pattern PATO may be at least partly filled with a gas AIR1.

The label 100 may comprise an adhesive layer ADH1 for bonding the label 100 to the container CNT1. The adhesive layer ADH1 may be in contact with the protective foil 30, or the adhesive layer ADH1 may be in contact with the carrier layer 10.

Referring to Fig. 9c, the diffractive pattern PAT0 may be formed e.g. on the rear surface of the carrier layer 10. The carrier layer 10 comprising the diffractive pattern PATO may be arranged to operate as the diffractive element DOE1. The carrier layer 10 may comprise a diffractive element (DOE1), or a diffractive element DOE1 may be attached to the rear side of the carrier layer 10. The carrier layer 10 may be arranged to operate as the top layer of the label 100, i.e. the carrier layer 10 may be the face layer of the label 100.

The label 100 may comprise the carrier layer 10 and an adhesive layer ADH1. The diffractive pattern PATO may be optionally partly or completely coated with the adhesive layer ADH1. The diffractive pattern PATO may be in contact with the adhesive ADH1. The adhesive ADH1 and/or the material of the carrier layer 10 may be selected such that the refractive index of the adhesive is substantially different from the refractive index of the material of the carrier layer 10, so as to provide sufficient diffraction efficiency.

The diffractive pattern PATO may be located between the carrier layer 10 and the adhesive layer ADH1. The carrier layer 10 may protect the diffractive pattern PATO after the adhesive layer ADH1 has been bonded to a container CNT1.

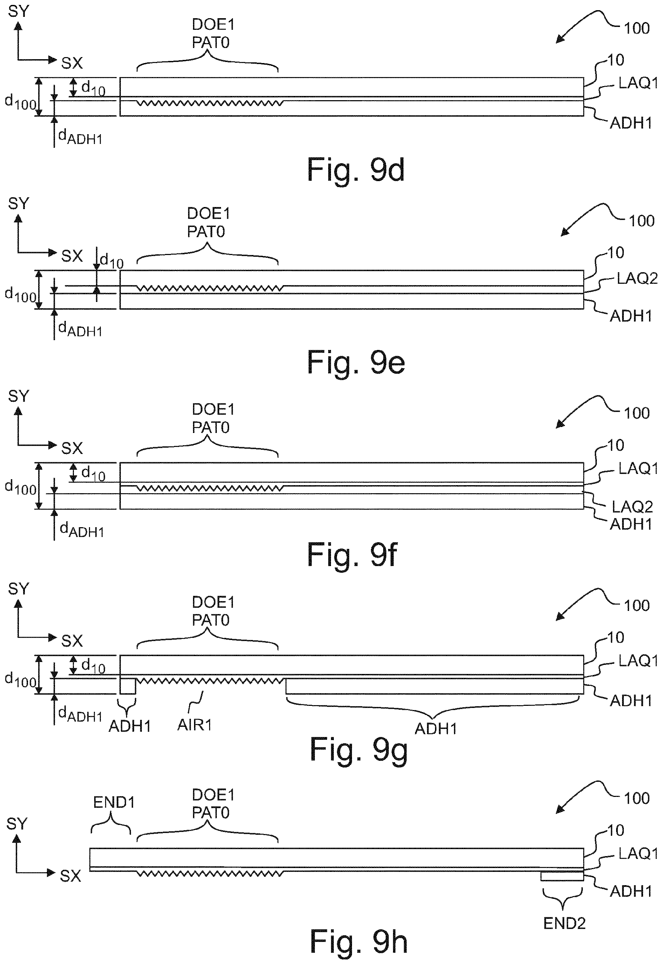

Referring to Fig. 9d, the label 100 may comprise an auxiliary layer LAQ1 between the carrier layer 10 and the adhesive layer ADH1. The diffractive pattern PATO may be formed on the auxiliary layer LAQ1. The diffractive pattern PATO may be e.g. embossed on a layer of lacquer LAQ1. The adhesive ADH1 and/or the material of the auxiliary layer LAQ1 may be selected such that the refractive index of the adhesive is substantially different from the refractive index of the auxiliary layer LAQ1, so as to provide sufficient diffraction efficiency.

Referring to Fig. 9e, the label 100 may comprise a coating layer LAQ2 between the diffractive pattern PATO and the adhesive layer ADH1. The coating layer LAQ2 may be located between the carrier layer 10 and the adhesive layer ADH1. The material of the coating layer LAQ2 may be selected such that the refractive index of the coating layer LAQ2 is substantially different from the material of the carrier layer 10, so as to provide sufficient diffraction efficiency.

Referring to Fig. 9f, the label 100 may comprise a coating layer LAQ2 between an embossed layer LAQ1 and the adhesive layer ADH1. The layers LAQ1, LAQ may be located between the carrier layer 10 and the adhesive layer LAQ2. The material of the coating layer LAQ2 may be selected such that the refractive index of the coating layer LAQ2 is substantially different from the material of the embossed layer LAQ1, so as to provide sufficient diffraction efficiency.

Referring to Fig. 9g, the label 100 may also be implemented such that at least a part of the diffractive pattern PATO is not covered with adhesive ADH1. At least a part of the diffractive features F1 may remain at least partly filled with a gas (AIR1), so as to provide a sufficient diffraction efficiency. The diffractive pattern PATO may be e.g. partly in contact with the container CNT1 after the label 100 has been attached to the container CNT1. The diffractive pattern PATO may operate in a mechanically protected location between the carrier layer 10 and the surface of the container CNT1. The diffractive pattern PATO may be formed e.g. on the rear surface of the carrier layer 10, on the auxiliary embossed layer LAQ1, or on an additional piece (DOE1), which is attached to the rear side of the carrier layer 10.

Referring to Fig. 9h, the adhesive layer ADH1 may also cover e.g. less than 50% of the rear surface of the label 100. The adhesive ADH1 may be applied e.g. as a strip to an end portion of the label 100. The label 100 may be e.g. a wrap around label, wherein a first end portion END1 of the label 100 may be bonded to a second end portion END2 of the label 100 so as to form a sleeve. The label 100 may be wrapped around a container CNT1 e.g. before or after joining the ends together. The sleeve may be optionally shrunk e.g. by heating, so that the label may conform to the shape of the container CNT1. The end portions END1, END2 may be joined together e.g. by adhesive ADH1 or by welding. A wrap around label 100 may be attached to the container CNT1 also without using an adhesive. The label may even be implemented also without the adhesive. The diffractive features of the diffractive pattern PATO may optionally remain at least partly filled with a gas, so as to provide a sufficient diffraction efficiency. The diffractive pattern PATO may be optionally in contact with the surface of the container CNT1. The diffractive pattern PATO may be in a protected position between the carrier layer 10 and the container CNT1. A blurring effect of the adhesive may be substantially avoided. A wrap around label 100 comprising the diffractive element DOE1 may be arranged to provide a sharp and bright virtual image VM1 at low manufacturing costs.

Referring to Figs. 8 to 9h, the material of the carrier layer 10 may be e.g. polyester, PET (Polyethylene terephthalate), PMMA Poly(methyl methacrylate), TPU (Thermoplastic polyurethane), PC (polycarbonate), PP (polypropylene), or PE (polytethylene). The thickness of the carrier layer 10 may be e.g. in the range of 10 µm to 500 µm. The thickness d₁₀ of the carrier layer 10 may be e.g. in the range of 5 µm to 200 µm, preferably in the range of 23 µm to 75 µm. The diffractive element DOE1 of the label 100 may be formed e.g. by embossing the diffraction pattern PAT0 on the carrier layer 10 or by embossing on an auxiliary coating layer (LAQ1).

The diffractive element DOE1 may also be an element, which is attached to a material layer (10) of the label 100. The diffractive element DOE1 may be obtained e.g. by cutting a piece from an embossed sheet of material. The material of the diffractive element DOE1 may be e.g. UV curable lacquer (LAQ1), polyester, PET (Polyethylene terephthalate), PMMA Poly(methyl methacrylate), TPU (Thermoplastic polyurethane). The thickness of the diffractive element DOE1 may be e.g. in the range of 10 µm to 500 µm.

The material of the optional protective layer 20, 30 may be e.g. lacquer (LAQ2), polyester, PET (Polyethylene terephthalate), PMMA Poly(methyl methacrylate), PC (polycarbonate), PP (polypropylene), or PE (polytethylene). The thickness of the protective layer 20, 30 may be e.g. in the range of 10 µm to 500 µm.

The adhesive layer ADH1 may comprise e.g. pressure sensitive adhesive (PSA). The adhesive layer ADH1 may comprise e.g. hot melt adhesive. The adhesive layer ADH1 may comprise e.g. adhesive which is curable with ultraviolet (UV) light.

The adhesive layer ADH1, the carrier layer 10, the protective layer 20, and/or the protective layer 30, FILM1 may be substantially transparent at least in a region which overlaps the diffractive pattern PATO.

One or more reference marking MRKO may be formed on a layer of the label 100 e.g. by printing. The marking MRKO may be formed e.g. on the carrier layer 10 e.g. by printing.

The carrier layer 10 of the label 100 may be substantially transparent, e.g. to provide a no-label look.

The label 100 may also be attached to the container CNT1 such that the adhesive layer ADH1 only partially covers the label 100. For example, the adhesive layer ADH1 may be applied as a strip to peripheral regions of the label 100. The label 100 may be attached to the container CNT1 such that the illuminating beam LB0 may impinge on the diffractive element DOE1 without passing through the adhesive layer ADH1, so as to reduce blurring of the virtual image VM1.

The label 100 may optionally comprise one or more structural features (INC1) to ensure that the label 100 is irreversibly damaged upon an attempt to remove the label 100 from the container CNT1, after the label 100 has been attached to the container CNT1. The structural features (INC1) may be e.g. perforated portions or incisions. The structural features (INC1) may be e.g. regions where the tensile strength of a layer is substantially smaller than an average tensile strength of said layer.

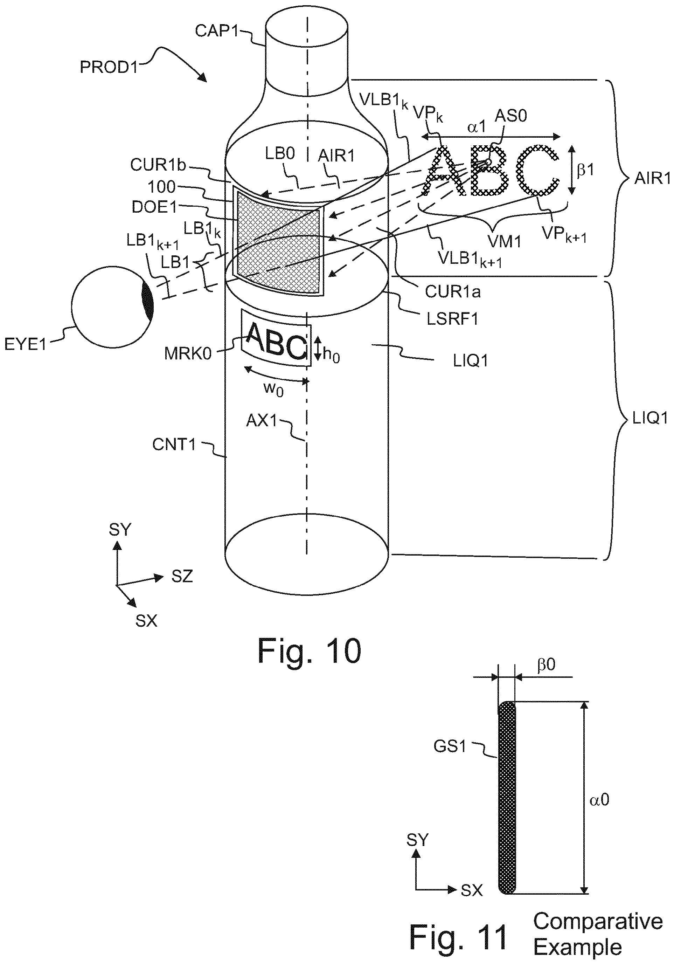

Referring to Fig. 10, the container CNT1 may comprise non-planar portions (e.g. CUR1a, CUR1b). The diffractive element DOE1 may overlap a non-planar portion CUR1b of the container CNT1. The container CNT1 may contain an amount of a liquid LIQ1 and an amount of a gas AIR1. The virtual image VM1 may be formed by light LB1, which is diffracted by an overlapping portion of the diffractive element DOE1, wherein said overlapping portion of the diffractive element DOE1 may overlap the non-planar portion CUR1b. The virtual image VM1 may be formed by light LB1, which is diffracted by a non-planar portion of the diffractive element DOE1. Transmitting the illuminating beam LB0 through the liquid LIQ1 and through non-planar portions CUR1a, CUR1b of the container CNT1 may cause blurring of the virtual image VM1. The illuminating area ASO may be arranged to illuminate the diffractive element DOE1 with the illuminating beam LB0 such that the illuminating beam LB0 is transmitted through the gas AIR1, e.g. to avoid the blurring. The illuminating area ASO may be arranged to illuminate the diffractive element DOE1 with the illuminating beam LB0 such that the illuminating beam LB0 is not transmitted through the liquid LIQ1.

The diffractive element (DOE1) may overlap a non-planar portion (CUR1b) of the container (CNT1). The container (CNT1) may contain an amount of a liquid (LIQ1) and an amount of a gas (AIR1). The illuminating light beam (LBO) may be transmitted from the illuminating area (AS0) to the diffractive element (DOE1) through substantially non-planar portions (CUR1a, CUR1b) of the container (CNT1) and through the gas (AIR1), e.g. to avoid the blurring effect.

The container may have e.g. a substantially circular or oval cross-sectional shape. The liquid-filled container may operate e.g. as a cylindrical magnifying glass, which may optically deform the illuminating beam provided from the illuminating area AS1. The container CNT1 may e.g. have an axis AX1 of symmetry. The diffractive element DOE1 may e.g. overlap a substantially cylindrical, a substantially conical surface portion, or a doubly curved portion of the container

In an embodiment, optical deforming effects caused by non-planar surfaces (CUR1a, CUR1b) of the liquid-filled container may substantially prevent visual detection of the virtual image. The product PROD1 may be arranged to intentionally cause blurring when the container is filled with the liquid. A covert effect may be implemented e.g. by using the diffractive element with a liquid-filled container, which has non-planar surfaces (CUR1a, CUR1b). The virtual image may become visually detectable only after some liquid has been poured away from the container, or when the container is turned upside down.

The diffractive element (DOE1) may overlap a non-planar portion (CUR1b) of the container (CNT1), wherein the container (CNT1) may be filled with a liquid (LIQ1) so as to prevent detecting the virtual image (VM1) by visual observation until the liquid (LIQ1) is replaced with a gas (AIR1).

Fig. 11 shows, by way of example, a deformed glare spot GS1, which may be formed when a circular illuminating area ASO is viewed through a non-planar portion (e.g. CUR1b) of a container CNT1 filled with the liquid LIQ1. Optical deformation caused by one or more non-planar portions (CUR1a, CUR1b) of the filled container CNT1 may cause significant blurring of the virtual image VM1.

## Claims

1. A method, comprising:
- providing a product (PROD1), which comprises a combination of a transparent container (CNT1) and a security label (100) attached to the container (CNT1) for indicating authenticity of the product (PROD1), the security label (100) comprising a transmissive diffractive element (DOE1), wherein positions and dimensions of diffractive features (F1) of the diffractive element (DOE1) have been determined to form a predetermined virtual image (VM1), which represents a graphical pattern,
- providing a non-coherent diverging white illuminating light beam (LBO) from an illuminating area (ASO), and
- forming the virtual image (VM1) observable from a viewing position (POS1) by illuminating the diffractive element (DOE1) with the illuminating light beam (LBO),
wherein the diffractive element (DOE1) overlaps a non-planar portion (CUR1b) of the container (CNT1), wherein the container (CNT1) contains an amount of the liquid (LIQ1) and an amount of a gas (AIR1), and wherein the virtual image (VM1) is visually observable when the illuminating light beam (LBO) is transmitted from the illuminating area (ASO) to the diffractive element (DOE1) through non-planar portions (CUR1a, CUR1b) of the container (CNT1) and through the gas (AIR1).

2. The method of claim 1, wherein a distance (L1) between the viewing position (POS1) and the illuminating area (ASO) is in the range of 100 to 1000 times a transverse dimension (h_{AS0},w_{AS0}) of the illuminating area (AS0).

3. The method of claim 1 or 2, wherein an angular width (α0) of the illuminating area (ASO) is in the range of 0.001 rad to 0.01 rad in a situation where the illuminating area (ASO) is viewed from the viewing position (POS1), and the distance (L3) between the viewing position (POS1) and the diffractive element (DOE1) is equal to 0.5 m.

4. The method according to any of the claims 1 to 3, wherein diffractive properties of the diffractive element (DOE1) and/or the dimensions (α0,β0) of the illuminating area (ASO) are selected such that the angular width (α2) of each feature of the virtual image (VM1) is greater than 125% of the angular width (α0) of the illuminating area (ASO), and the angular height (β2) of each feature of the virtual image (VM1) is greater than 125% of the angular height (β0) of the illuminating area (ASO), in the situation where the illuminating area (ASO) and the virtual image (VM1) are viewed from the viewing position (POS1), and the distance (L3) between the viewing position (POS1) and the diffractive element (DOE1) is equal to 0.5 m.

5. The method according to any of the claims 1 to 4, wherein the diffractive element (DOE1) is arranged to diffract light such that an angular width (α2) of each feature of a reference virtual image (VM1) is greater than 0.01 rad, the reference virtual image (VM1) being formed in a reference situation where the distance (L3) between the viewing position (POS1) and the diffractive element (DOE1) is equal to 0.5 m, and a reference illuminating light beam (LBO) is obtained from a reference illuminating area (ASO), which has an angular width (α0) of 0.001 rad when viewed from the viewing position (POS1), the reference illuminating beam being a non-coherent light beam (LBO), which has substantially white color.

6. The method according to any of the claims 1 to 5, wherein the illuminating area (ASO) is defined by a light emitter (LS1).

7. The method according to any of the claims 1 to 5, wherein the illuminating area (ASO) is defined by an optical waveguide (FIB1).

8. The method according to any of the claims 1 to 5, wherein the illuminating area (ASO) is defined by an opening of a mask (MASK1).

9. The method according to any of the claims 1 to 5, wherein the illuminating area (ASO) is defined by a light-deflecting element (M1).

## Patentansprüche

1. Verfahren, umfassend:
- Bereitstellen eines Produkts (PROD1), das eine Kombination aus einem transparenten Behälter (CNT1) und einem an dem Behälter (CNT1) angebrachten Sicherheitsetikett (100) zur Anzeige der Echtheit des Produkts (PROD1) umfasst, wobei das Sicherheitsetikett (100) ein durchlässiges diffraktives Element (DOE1) umfasst, wobei Positionen und Abmessungen von diffraktiven Merkmalen (F1) des diffraktiven Elements (DOE1) bestimmt wurden, um ein vorgegebenes virtuelles Bild (VM1) zu bilden, das ein grafisches Muster darstellt,
- Bereitstellen eines nicht kohärenten divergierenden weißen Beleuchtungslichtstrahls (LBO) aus einem Beleuchtungsbereich (ASO), und
- Bilden des von einer Betrachtungsposition (POS1) aus beobachtbaren virtuellen Bilds (VM1) durch Beleuchten des diffraktiven Elements (DOE1) mit dem Beleuchtungslichtstrahl (LBO),
wobei das diffraktive Element (DOE1) einen nichtplanaren Abschnitt (CUR1b) des Behälters (CNT1) überlappt, wobei der Behälter (CNT1) eine Menge der Flüssigkeit (LIQ1) und eine Menge eines Gases (AIR1) enthält, und wobei das virtuelle Bild (VM1) visuell wahrnehmbar ist, wenn der Beleuchtungslichtstrahl (LBO) von dem Beleuchtungsbereich (ASO) durch nicht-planare Abschnitte (CUR1a, CUR1b) des Behälters (CNT1) und durch das Gas (AIR1) zum diffraktiven Element (DOE1) übertragen wird.

2. Verfahren nach Anspruch 1, wobei ein Abstand (L1) zwischen der Betrachtungsposition (POS1) und dem Beleuchtungsbereich (AS0) im Bereich des 100- bis 1000-fachen einer Querabmessung (h_{AS0}, w_{AS0}) des Beleuchtungsbereichs (AS0) liegt.

3. Verfahren nach Anspruch 1 oder 2, wobei eine Winkelbreite (α0) des Beleuchtungsbereichs (AS0) im Bereich von 0,001 Rad bis 0,01 Rad liegt, wenn der Beleuchtungsbereich (AS0) von der Betrachtungsposition (POS1) aus betrachtet wird und der Abstand (L3) zwischen der Betrachtungsposition (POS1) und dem diffraktiven Element (DOE1) 0,5 m beträgt.

4. Verfahren nach einem der Ansprüche 1 bis 3, wobei die Beugungseigenschaften des Beugungselements (DOE1) und/oder die Abmessungen (α0, β0) des Beleuchtungsbereichs (AS0) so gewählt werden, dass die Winkelbreite (α2) jedes Merkmals des virtuellen Bilds (VM1) größer als 125 % der Winkelbreite (α0) des Beleuchtungsbereichs (ASO) ist und die Winkelhöhe (β2) jedes Merkmals des virtuellen Bilds (VM1) größer als 125 % der Winkelhöhe (β0) des Beleuchtungsbereichs (ASO) ist, in der Situation, in der der Beleuchtungsbereich (ASO) und das virtuelle Bild (VM1) von der Betrachtungsposition (POS1) aus betrachtet werden, und der Abstand (L3) zwischen der Betrachtungsposition (POS1) und dem Beugungselement (DOE1) gleich 0,5 m ist.

5. Verfahren nach einem der Ansprüche 1 bis 4, wobei das Beugungselement (DOE1) so angeordnet ist, dass es Licht so beugt, dass eine Winkelbreite (α2) jedes Merkmals eines virtuellen Referenzbilds (VM1) größer als 0,01 rad ist, das virtuelle Referenzbild (VM1) in einer Referenzsituation gebildet wird, in der der Abstand (L3) zwischen der Betrachtungsposition (POS1) und dem Beugungselement (DOE1) 0,5 m beträgt und ein Referenzbeleuchtungslichtstrahl (LBO) aus einem Referenzbeleuchtungsbereich (ASO) erhalten wird, der eine Winkelbreite (α0) von 0,001 rad aufweist, wenn er von der Betrachtungsposition (POS1) aus betrachtet wird, wobei der Referenzbeleuchtungsstrahl ein nicht kohärenter Lichtstrahl (LBO) ist, der im Wesentlichen eine weiße Farbe aufweist.

6. Verfahren nach einem der Ansprüche 1 bis 5, wobei der Beleuchtungsbereich (ASO) durch einen Lichtemitter (LS1) definiert ist.

7. Verfahren nach einem der Ansprüche 1 bis 5, wobei der Beleuchtungsbereich (ASO) durch einen optischen Wellenleiter (FIB1) definiert ist.

8. Verfahren nach einem der Ansprüche 1 bis 5, wobei der Beleuchtungsbereich (ASO) durch eine Öffnung einer Maske (MASK1) definiert ist.

9. Verfahren nach einem der Ansprüche 1 bis 5, wobei der Beleuchtungsbereich (ASO) durch ein lichtablenkendes Element (M1) definiert ist.

## Revendications

1. Procédé, comprenant :
- la fourniture d'un produit (PROD1), qui comprend une combinaison d'un récipient transparent (CNT1) et d'une étiquette de sécurité (100) fixée au récipient (CNT1) pour l'indication de l'authenticité du produit (PROD1), l'étiquette de sécurité (100) comprenant un élément diffractif transmissif (DOE1), dans lequel des positions et des dimensions de caractéristiques diffractives (F1) de l'élément diffractif (DOE1) ont été déterminées pour former une image virtuelle prédéterminée (VM1), qui représente un motif graphique,
- la fourniture d'un faisceau lumineux d'éclairage (LBO) blanc divergent non cohérent à partir d'une zone d'éclairage (AS0), et
- la formation de l'image virtuelle (VM1) observable à partir d'une position de visualisation (POS1) en éclairant l'élément diffractif (DOE1) avec le faisceau lumineux d'éclairage (LBO),
dans lequel l'élément diffractif (DOE1) chevauche une partie non plane (CUR1b) du récipient (CNT1), dans lequel le récipient (CNT1) contient une quantité du liquide (LIQ1) et une quantité d'un gaz (AIR1), et dans lequel l'image virtuelle (VM1) est visuellement observable lorsque le faisceau lumineux d'éclairage (LBO) est transmis de la zone d'éclairage (ASO) à l'élément diffractif (DOE1) à travers des parties non planes (CUR1a, CUR1b) du récipient (CNT1) et à travers le gaz (AIR1).

2. Procédé selon la revendication 1, dans lequel une distance (L1) entre la position de visualisation (POS1) et la zone d'éclairage (AS0) est comprise entre 100 et 1 000 fois une dimension transversale (h_{AS0}, W_{AS0}) de la zone d'éclairage (AS0).

3. Procédé selon la revendication 1 ou 2, dans lequel une largeur angulaire (α0) de la zone d'éclairage (ASO) est comprise entre 0,001 rad et 0,01 rad dans une situation dans laquelle la zone d'éclairage (ASO) est vue depuis la position de visualisation (POS1), et la distance (L3) entre la position de visualisation (POS1) et l'élément diffractif (DOE1) est égale à 0,5 m.

4. Procédé selon l'une quelconque des revendications 1 à 3, dans lequel des propriétés diffractives de l'élément diffractif (DOE1) et/ou les dimensions (α0,β0) de la zone d'éclairage (AS0) sont sélectionnées de telle sorte que la largeur angulaire (α2) de chaque caractéristique de l'image virtuelle (VM1) soit supérieure à 125 % de la largeur angulaire (α0) de la zone d'éclairage (ASO), et que la hauteur angulaire (β2) de chaque caractéristique de l'image virtuelle (VM1) soit supérieure à 125 % de la hauteur angulaire (β0) de la zone d'éclairage (ASO), dans la situation dans laquelle la zone d'éclairage (ASO) et l'image virtuelle (VM1) sont vues depuis la position de visualisation (POS1), et la distance (L3) entre la position de visualisation (POS1) et l'élément diffractif (DOE1) est égale à 0,5 m.

5. Procédé selon l'une quelconque des revendications 1 à 4, dans lequel l'élément diffractif (DOE1) est agencé pour diffracter la lumière de telle sorte qu'une largeur angulaire (α2) de chaque caractéristique d'une image virtuelle de référence (VM1) soit supérieure à 0,01 rad, l'image virtuelle de référence (VM1) étant formée dans une situation de référence dans laquelle la distance (L3) entre la position de visualisation (POS1) et l'élément diffractif (DOE1) est égale à 0,5 m, et un faisceau lumineux d'éclairage de référence (LBO) est obtenu à partir d'une zone d'éclairage de référence (AS0), qui a une largeur angulaire (α0) de 0,001 rad lorsqu'elle est vue depuis la position de visualisation (POS1), le faisceau d'éclairage de référence étant un faisceau lumineux non cohérent (LBO), qui a une couleur sensiblement blanche.

6. Procédé selon l'une quelconque des revendications 1 à 5, dans lequel la zone d'éclairage (ASO) est définie par un émetteur de lumière (LS1).

7. Procédé selon l'une quelconque des revendications 1 à 5, dans lequel la zone d'éclairage (ASO) est définie par un guide d'onde optique (FIB1).

8. Procédé selon l'une quelconque des revendications 1 à 5, dans lequel la zone d'éclairage (ASO) est définie par une ouverture d'un masque (MASK1).

9. Procédé selon l'une quelconque des revendications 1 à 5, dans lequel la zone d'éclairage (ASO) est définie par un élément déflecteur de lumière (M1).
